# EUROPEAN PATENT APPLICATION

(11) **EP 2 380 449 A1**
(43) Date of publication of application: **26.10.2011**
(21) Application number: 09837520.7
(22) Date of filing: 21.08.2009
(51) Int. Cl.: A23L 2/38, A23L 2/68

(54) **UNFERMENTED MALT DRINK WITH BEER FLAVOR HAVING REDUCED OR RELIEVED SOURNESS AND METHOD FOR PRODUCING THE SAME**

(30) Priority: 08.01.2009 JP 2009002819
(71) Applicant: KIRIN BEER KABUSHIKI KAISHA, Chuo-Ku Tokyo 104-8288 (JP)
(72) Inventor: ITAKURA, Takehito, Tokyo 104-8288 (JP); OTA, Takehito, Tokyo 104-8288 (JP); KITO, Hideaki, Tokyo 104-8288 (JP)
(74) Representative: HOFFMANN EITLE
(86) International application number: PCT/JP2009/064660
(87) International publication number: WO 2010/079634

(57) **Abstract**

An object of the present invention is to provide an unfermented malt beverage that has reduced or eased sourness derived from a pH adjuster and has a beer flavor, and to provide a method for producing the same. The present invention provides an unfermented beer-flavored malt beverage having a pH lower than 4.0 comprising a wort, a pH adjuster, and a seasoning ingredient, wherein the sourness of the pH adjuster is reduced or eased by the seasoning ingredient.

## Description

### Technical Field

The present invention relates to an unfermented beer-flavored malt beverage having reduced or eased sourness and a method for producing the same.

### Background Art

As health consciousness has risen in recent years, increasing numbers of people control alcohol intakes by themselves. Also, the revision of the Road Traffic Act, such as strengthened penalties for drunk driving, has aroused interest in the alcohol consumption among people involved in the operation of cars or the like. Under such circumstances, there has been a more and more growing demand for low-alcoholic or non-alcoholic beer-flavored malt beverages.

In conventional low-alcoholic beer-flavored malt beverages, the beer flavor is imparted by performing fermentation using yeast, as in usual beer beverages while their alcohol contents are reduced. This is because it has been considered that it is difficult to produce the low-alcoholic malt beverages, for which consumers expect beer-like taste and aroma, by completely avoiding alcohol fermentation. Thus, the conventional low-alcoholic beer-flavored malt beverages are produced based on the premise that the fermentation using yeast is performed. Accordingly, previous studies have been made on methods of improving the metabolic process of yeast or effectively removing alcohol from fermentation products.

However, any of the conventional techniques were premised on the fermentation using yeast. In actuality, it was impossible to completely remove alcohol from fermented products. Thus, the conventional low-alcoholic beer-flavored malt beverages are not suitable for drinking by people who do not want to consume alcohol or drivers of cars or the like.

On the other hand, when worts produced from malt by merely avoiding fermentation using yeast are used as final products, they are treated as beverages. In such a case, the Food Sanitation Act (Ministry of Health, Labour and Welfare Ministerial Notification No. 213) requires that the worts having a pH lower than 4.0 should be sterilized at 65°C for 10 minutes or by a treatment equivalent thereto or more and that the worts having a pH of 4.0 to 4.6 should be sterilized at 85°C for 30 minutes or by a treatment equivalent thereto or more. When a product is designed to have a selected pH lower than 4.0 particularly because of limitations of sterilization equipment or from the viewpoint of energy cost or the like required for the sterilization, the strong sourness of the product becomes a problem.

Generally, a pH of malt beverages is decreased by the addition of a food additive or the like. However, malt beverages of which a pH is decreased to lower than 4.0 using the additive have sharp sourness, compared with fermented beverages such as beer of which a pH is decreased through fermentation using microbes such as yeast. Such sourness is out of proportion to other tastes and is thus unpleasant. Somewhat sourness aimed at freshness is acceptable in refreshing beverages containing fruit juice or general carbonated beverages designed to be pungent while distinctive sourness is fatal to the flavor of beer-flavored malt beverages. Thus, the beer-flavored malt beverages require the quality and strength of sourness well-balanced with other tastes such as sweetness, bitterness, and umami.

Japanese Patent Laid-Open Publication No. 2005-261395 (Patent Publication 1) discloses a beverage containing citric acid of which sourness is eased using sodium succinate. However, this patent publication discloses refreshing beverages such as sport drinks as the beverage containing citric acid and does not disclose the suppression of sourness in beer-flavored malt beverages mainly composed of a wort.

Patent Publication 1: Japanese Patent Laid-Open Publication No. 2005-261395

### Summary of the Invention

An object of the present invention is to provide an unfermented beer-flavored malt beverage that has reduced or eased sourness derived from a pH adjuster and has favorable, well-balanced tastes as a beer-flavored beverage, and to provide a method for producing the same.

The present inventors have found that by allowing a particular seasoning ingredient to exist in a wort with a pH adjusted to lower than 4.0 using a pH adjuster, the sourness of a pH adjuster can be reduced or eased and favorable, well-balanced tastes as a beer-flavored beverage can be achieved. The findings were surprising to the present inventors that by allowing the seasoning ingredient to exist in the wort, the strong sourness of the pH adjuster can be reduced or eased and well-balanced tastes as a beer-flavored beverage can be achieved even in an unfermented wort.

Thus, according to the present invention, there are provided the following inventions. (1) An unfermented beer-flavored malt beverage having a pH lower than 4.0 comprising a wort, a pH adjuster, and a seasoning ingredient, wherein the seasoning ingredient is selected from the group consisting of a combination of glutamic acid and succinic acid, a combination of glutamic acid and alanine, a combination of glutamic acid and glycine, and a combination of succinic acid and alanine and the sourness of the pH adjuster is reduced or eased by the seasoning ingredient.
(2) The beverage according to (1), wherein the pH adjuster is one, two or more organic and/or inorganic acids having a pKa of 2 to 4.
(3) The beverage according to (1), wherein the wort is obtained by mashing a mixture comprising malt grist and water.
(4) The beverage according to (1), wherein the seasoning ingredient is the combination of glutamic acid and succinic acid.
(5) The beverage according to (4), wherein the beverage has glutamic acid at a concentration of 25 to 70 mg/L and succinic acid at a concentration of 55 to 120 mg/L.
(6) The beverage according to (1), wherein the seasoning ingredient is the combination of glutamic acid and alanine.
(7) The beverage according to (6), wherein the beverage has glutamic acid at a concentration of 25 to 50 mg/L and alanine at a concentration of 80 to 750 mg/L.
(8) The beverage according to (1), wherein the seasoning ingredient is the combination of glutamic acid and glycine.
(9) The beverage according to (8), wherein the beverage has glutamic acid at a concentration of 25 to 50 mg/L and glycine at a concentration of 30 to 160 mg/L.
(10) The beverage according to (1), wherein the seasoning ingredient is the combination of succinic acid and alanine.
(11) The beverage according to (10), wherein the beverage has succinic acid at a concentration of 25 to 65 mg/L and alanine at a concentration of 80 to 550 mg/L.
(12) A method for producing an unfermented beer-flavored malt beverage having a pH lower than 4.0, comprising adding a pH adjuster and a seasoning ingredient selected from the group consisting of a combination of glutamic acid or a salt thereof and succinic acid or a salt thereof, a combination of glutamic acid or a salt thereof and alanine, a combination of glutamic acid or a salt thereof and glycine, and a combination of succinic acid or a salt thereof and alanine to a wort, and the sourness of the pH adjuster is reduced or eased by the seasoning ingredient.

According to the present invention, there are provided an unfermented malt beverage that has reduced or eased sourness derived from a pH adjuster and has well-balanced tastes as a beer--flavared beverage, and a method for producing the same. The malt beverage according to the present invention is an unfermented malt beverage that satisfies sterilization criteria required by the Food Sanitation Act. Nevertheless, its strong sourness derived from a pH adjuster is reduced or eased, while favorable, well-balanced tastes as a beer-flavored beverage are achieved. Thus, the malt beverage according to the present invention is advantageous in that it can satisfy the consumer need for alcohol-free beverages and beverages having a beer flavor, which have not been compatible with each other so far.

### Detailed Description of the Invention

### Definitions

In the present invention, the term "malt beverage" means a beverage mainly composed of a wort and includes refreshing malt beverages that are given a refreshing feeling derived from carbon dioxide or the like.

In the present invention, the term "beer flavor" refers to a taste or aroma unique to beer which is obtained by usual production, i.e., production based on fermentation using yeast or the like.

In the present invention, the term "completely non-alcoholic" means that alcohol is completely absent, i.e., an alcohol content is 0% by weight.

In the present invention, the term "sourness" is one of the basic tastes composed of 5 different tastes (sweetness, saltiness, sourness, bitterness, and umami) and refers to a sour taste exhibited by an acid. Moreover, the "reduction or easing" of sourness means that the degree (strength) of sourness felt by the consumer is weakened.

In the present invention, the phrase "well-balanced tastes as a beer-flavored beverage" means that sourness is well-balanced with other tastes (umami, sweetness, bitterness, etc.) as a beer-flavored beverage in its evaluation.

### Malt beverage

A malt beverage according to the present invention is characterized in that in a wort supplemented with a pH adjuster, the sourness of the pH adjuster is reduced or eased by a seasoning ingredient. The malt beverage according to the present invention is totally free from alcohol ingredients derived from fermentation, because an unfermented wort is used therein. Hereinafter, the wort, the pH adjuster, and the seasoning ingredient will be described.

### [Wort]

A wort obtained by mashing a mixture of malt grist and water can be used as the wort constituting the malt beverage according to the present invention.

The mixture of malt grist and water may be supplemented with an adjunct. Examples of the adjunct include rice, corn starch, corn grits, sugars (e.g., liquid sugar syrup such as high fructose corn syrup), and dietary fiber. When the adjunct is sugars, these sugars may be added to the wort after mashing or filtration. Moreover, water may be mixed in the whole amount with malt grist. Alternatively, a portion of water may be mixed with malt grist, and the remaining portion may be added in the whole amount or in divided portions to the wort after mashing. Moreover, hop can be added, as described later, to the wort obtained by mashing the mixture of malt grist and water, and the mixture can be boiled to thereby impart the flavor and aroma of the hop to the wort.

The proportions of the malt grist, the adjunct, and water constituting the wort can be determined appropriately. The proportions of the malt grist, the adjunct, and water may be determined such that the final wort has a sugar content of 3 to 20%, preferably 7 to 14%. The proportions of the malt grist, the adjunct, and water can be set to, for example, 0 to 100 parts by weight of the adjunct and 400 to 2000 parts by weight of water, preferably 0 to 30 parts by weight of the adjunct and 600 to 1300 parts by weight of water, with respect to 100 parts by weight of the malt grist. When the adjunct is high fructose corn syrup and dietary fiber, the proportions of the malt grist, the adjunct, and water can be set to, for example, 10 to 40 parts by weight of the adjunct and 800 to 1500 parts by weight of water, preferably 20 to 30 parts by weight of the adjunct and 1000 to 1200 parts by weight of water, with respect to 100 parts by weight of the malt grist. In this case, the weight ratio (solid content) between the high fructose corn syrup and the dietary fiber can be set to 1:0.1 to 10.

### [pH adjuster]

The pH adjuster constituting the malt beverage according to the present invention means a ingredient that adjusts a pH to an acidic range, i.e., a low pH range. Examples of such a pH adjuster include one, two or more acids selected from the group consisting of sitologically acceptable organic and inorganic acids having a pKa (acid dissociation constant) of 2 to 4 (e.g., lactic acid, gluconic acid, citric acid, malic acid, and phosphoric acid). The content, type, or combination of the pH adjuster(s) in the malt beverage is not particularly limited as long as the selected pH adjuster(s) can adjust the pH of the malt beverage according to the present invention to lower than 4.0 and does not impair its beer flavor.

In the present invention, the sourness of the pH adjuster is reduced or eased by the addition of the seasoning ingredient described later. However, sourness acceptable as a beer-flavored beverage still remains in the beer-flavored malt beverage according to the present invention. From this viewpoint, the pH adjuster also serves as an acidulant, as a matter of course.

### [Seasoning ingredient]

A seasoning ingredient selected from the group consisting of a combination of glutamic acid and succinic acid, a combination of glutamic acid and alanine, a combination of glutamic acid and glycine, and a combination of succinic acid and alanine can be used as the seasoning ingredient constituting the malt beverage according to the present invention. In the malt beverage according to the present invention, by allowing the seasoning ingredient to exist in the wort having a pH adjusted to an acidic range, the sourness of the wort can be reduced or eased and well-balanced tastes as a beer-flavored beverage can be achieved.

Of these seasoning ingredients, an acid such as succinic acid has a seasoning effect in itself and also has sourness. Therefore, the acid such as succinic acid probably imparts sourness within a range acceptable as a beer-flavored beverage and thus also serves as an acidulant from this viewpoint.

The concentration of the seasoning ingredient in the malt beverage is not particularly limited as long as it can achieve the effect. When the combination of glutamic acid and succinic acid is used as the seasoning ingredient, the beverage can have glutamic acid at a concentration of 25 to 70 mg/L and succinic acid at a concentration of 55 to 120 mg/L.

Further, when the combination of glutamic acid and alanine is used as the seasoning ingredient, the beverage can have glutamic acid at a concentration of 25 to 50 mg/L and alanine at a concentration of 80 to 750 mg/L.

Further, when the combination of glutamic acid and glycine is used as the seasoning ingredient, the beverage can have glutamic acid at a concentration of 25 to 50 mg/L and glycine at a concentration of 30 to 160 mg/L.

Further, when the combination of succinic acid and alanine is used as the seasoning ingredient, the beverage can have succinic acid at a concentration of 25 to 65 mg/L and alanine at a concentration of 80 to 550 mg/L.

The seasoning ingredient may be added in salt form. The type of the salt is not particularly limited as long as it can reduce or ease the sourness of the unfermented wort having a pH adjusted to an acidic range and can achieve well-balanced tastes as a beer-flavored beverage. Examples of the salt of the seasoning ingredient that can be used in the present invention include well-known sitologically acceptable salts. For example, alkali metal salts such as a sodium salt and a potassium salt or alkaline-earth metal salts such as a calcium salt and a magnesium salt can be used.

### Method for producing malt beverage

According to the present invention, there is provided a method for producing an unfermented beer-flavored malt beverage having a pH lower than 4.0, comprising adding a pH adjuster and the above-mentioned seasoning ingredients to a wort, wherein the sourness of the pH adjuster is reduced or eased by the seasoning ingredients.

The wort used in the malt beverage according to the present invention can be prepared according to a conventional method. For example, the wort can be prepared by (a) mashing a mixture of malt grist and water, followed by filtration to obtain a wort, (b) adding hop to the obtained wort and then boiling the mixture, and (c) cooling the boiled wort.

In step (a), the malt grist can be any of those obtained by germinating barley, for example, two-rowed barley, by a conventional method and drying the germinated barley, which is then ground into a predetermined particle size. The mashing and fiiltration of the mixture of malt grist and water, and an optional adjunct can be carried out according to a conventional method.

In step (b), hop is added to the wort obtained in step (a). Then, the mixture can be boiled to thereby bring out the flavor and aroma of the hop. After the boiling, residues such as proteins formed by precipitation may be removed.

In step (c), the boiled wort is cooled. The cooling is preferably performed to a temperature as low as possible without freezing the wort, usually to a temperature of 1 to sic.

The obtained wort can be filtered to remove unnecessary proteins. The fiiltration can be performed according to a conventional method and can be preformed preferably using a diatomaceous earth filter. For the fiiitratian, the wort may be diluted by the addition of degassed water and then filtered to adjust the sugar content in the final product to 3 to 8%.

After the filtration., procedures performed in the production of usual beer or sparkling liquors can be performed appropriately, for example, adjustment of final concentrations with degassed water or the like, inclusion of carbon dioxide, pasteurization, charging (packaging) into containers (e.g., barrels, bottles, or cans), and labeling of the containers.

The pH adjuster and the seasoning ingredient may be added to the wort before mashing or after mashing or filtration. The pH adjuster and the seasoning ingredient may be added together or separately. When the pH adjuster and the seasoning ingredient are added separately, either of them may be added first. Even when the seasoning ingredient combination is added or a plurality of pH adjusters are added, these ingredients may be added together or separately. When these ingredients are separately added, either of them may be added first. For the addition of the seasoning ingredient, the necessity of the addition of the seasoning ingredient or the amount thereof added can be determined in consideration of the concentration of a seasoning ingredient originally contained in the wort, as a matter of course.

The wort may also be supplemented with additives such as a fragrance, a dye, and a foaming and foam-stability improving agent. These additives may be added to the wort before mashing or after mashing or filtration.

According to a preferable aspect of the present invention, there are provided an unfermented beer-flavored malt beverage having a pH lower than 4.0 comprising: a wort having a sugar content of 3 to 20%; one, two or more acids selected from the group consisting of lactic acid, gluconic acid, citric acid, malic acid, and phosphoric acid as a pH adjuster; and glutamic acid and succinic acid as a seasoning ingredient, wherein the sourness of the pH adjuster is reduced or eased by the seasoning ingredient, and a method for producing the same. In this case, the beverage can have glutamic acid at a concentration of 25 to 70 mg/L and succinic acid at a concentration of 55 to 120 mg/L.

According to a preferable aspect of the present invention, there are provided an unfermented beer-flavored malt beverage having a pH lower than 4.0 comprising: a wort having a sugar content of 3 to 20%; one, two or more acids selected from the group consisting of lactic acid, gluconic acid, citric acid, malic acid, and phosphoric acid as a pH adjuster; and glutamic acid and alanine as a seasoning ingredient, wherein the sourness of the pH adjuster is reduced or eased by the seasoning ingredient, and a method for producing the same. In this case, the beverage can have glutamic acid at a concentration of 25 to 50 mg/L and alanine at a concentration of 80 to 750 mg/L.

According to a preferable aspect of the present invention, there are provided an unfermented beer-flavored malt beverage having a pH lower than 4.0 comprising: a wort having a sugar content of 3 to 20%; one, two or more acids selected from the group consisting of lactic acid, gluconic acid, citric acid, malic acid, and phosphoric acid as a pH adjuster; and glutamic acid and glycine as a seasoning ingredient, wherein the sourness of the pH adjuster is reduced or eased by the seasoning ingredient, and a method for producing the same. In this case, the beverage can have glutamic acid at a concentration of 25 to 50 mg/L and glycine at a concentration of 30 to 160 mg/L.

According to a preferable aspect of the present invention, there are provided an unfermented beer-flavored malt beverage having a pH lower than 4.0 comprising: a wort having a sugar content of 3 to 20%; one, two or more acids selected from the group consisting of lactic acid, gluconic acid, citric acid, malic acid, and phosphoric acid as a pH adjuster; and succinic acid and alanine as a seasoning ingredient, wherein the sourness of the pH adjuster is reduced or eased by the seasoning ingredient, and a method for producing the same. In this case, the beverage can have succinic acid at a concentration of 25 to 65 mg/L and alanine at a concentration of 80 to 550 mg/L.

As shown in Examples described later, by allowing glutamic acid and succinic acid to exist in the malt beverage, the sourness of the pH adjuster can be reduced or eased and well-balanced tastes as a beer-flavored beverage can also be achieved. Thus, according to the present invention, there are provided an unfermented beer-flavored malt beverage having a pH lower than 4.0 supplemented with a pH adjuster, wherein a concentration of glutamic acid in the beverage is adjusted to 25 to 70 mg/L and a concentration of succinic acid in the beverage is adjusted to 55 to 120 mg/L, and a method for producing the same. In this beer-flavored malt beverage, the sourness of the added pH adjuster is reduced or eased, while well-balanced tastes as a beer-flavored beverage are achieved.

As shown in Examples described later, by allowing glutamic acid and alanine to exist in the malt beverage, the sourness of the pH adjuster can be reduced or eased and well-balanced tastes as a beer-flavored beverage can also be achieved. Thus, according to the present invention, there are provided an unfermented beer-flavored malt beverage having a pH lower than 4.0 supplemented with a pH adjuster, wherein a concentration of glutamic acid in the beverage is adjusted to 25 to 50 mg/L and a concentration of alanine in the beverage is adjusted to 80 to 750 mg/L, and a method for producing the same. In this beer-flavored malt beverage, the sourness of the added pH adjuster is reduced or eased, while well-balanced tastes as a beer-flavored beverage are achieved.

As shown in Examples described later, by allowing glutamic acid and glycine to exist in the malt beverage, the sourness of the pH adjuster can be reduced or eased and well-balanced tastes as a beer-flavored beverage can also be achieved. Thus, according to the present invention, there are provided an unfermented beer-flavored malt beverage having a pH lower than 4.0 supplemented with a pH adjuster, wherein a concentration of glutamic acid in the beverage is adjusted to 25 to 50 mg/L and a concentration of glycine in the beverage is adjusted to 30 to 160 mg/L, and a method for producing the same. In this beer-flavored malt beverage, the sourness of the added pH adjuster is reduced or eased, while well-balanced tastes as a beer-filavared beverage are achieved.

As shown in Examples described later, by allowing succinic acid and alanine to exist in the malt beverage, the sourness of the pH adjuster can be reduced or eased and well-balanced tastes as a beer-flavored beverage can also be achieved. Thus, according to the present invention, there are provided an unfermented beer-flavored malt beverage having a pH lower than 4.0 supplemented with a pH adjuster, wherein a concentration of succinic acid in the beverage is adjusted to 25 to 65 mg/L and a concentration of alanine in the beverage is adjusted to 80 to 550 mg/L, and a method for producing the same, In this beer-flavored malt beverage, the sourness of the added pH adjuster is reduced or eased, while well-balanced tastes as a beer-flavored beverage are achieved.

### Examples

Hereinafter, the present invention will be specifically described in the following examples. However, these examples are not intended to limit the scope of the present invention.

### Examples 1: Production of completely non-alcoholic beer-flavored beverage and evaluation thereof

### (1) Preparation of wort

200 kg of malt grist and 700 L of hot water were added to a mash tun and mixed. The mixture was mashed at 50 to 76°C. After the completion of the mashing procedure, the resulting product was filtered in a wort filtering chamber to obtain a clear wort as a filtrate thereof.

The obtained wort was transferred to a boiling vessel, to which 80 kg (in terms of solid content) of adjuncts mainly composed of liquid sugar syrup was then added. 1 kg of hop was further added thereto, and the mixture was boiled at 100°C. The boiled wort was placed in a whirlpool bath, to which lactic acid was then added to adjust its pH to 4.0. Subsequently, residues such as proteins formed by precipitation were removed. To this boiled wort, hot water was added to adjust its sugar content to 7%. The obtained wort (1,800 L) was cooled to 4°C on a plate cooler. After addition of degassed water, the wort was filtered using a diatomaceous earth filter to obtain a wort (sugar content: 4%) subjected to a sensory evaluation test and component analysis described later, The density at 20°C measured using an oscillator densitometer was defined as a sugar content (%).

### (2) Evaluation on sourness - I -

To the wort prepared in section (1), various ingredients were added in an amount shown in Table 1 per L of the wort. These samples were subjected to a sensory evaluation test. Specifically, eight well-trained panelists skilled in the evaluation of beer-type beverages conducted sensory evaluation on the strength and quality of sourness according to the criteria shown below.

### [Strength of sourness]

0: Sourness was significantly reduced or eased and was mild enough to be ignored.
1: Sourness was present, but was evidently reduced or eased compared with the unsupplemented control.
2: Sourness was equivalent to that of the unsupplemented control or was enhanced (opposite effect to the desired one).
(For the evaluation, the panelists each independently scored samples, and the average of the scores was used as evaluation results. A sample given an average score of 1.25 or lower was determined as having a sourness-reducing or -easing effect.)

### [Evaluation on quality of sourness]

×: The obtained beverage lacked balance between sourness and other tastes (umami, sweetness, bitterness, etc.) as a beer-flavored beverage. It also includes a case in which other tastes were outstanding, although sourness was reduced or eased.
Δ: Between "×" and "○" (not corresponding to any of them).
○: The obtained beverage had sourness well-balanced with other tastes (umami, sweetness, bitterness, etc.) as a beer-flavored beverage and had the quality of sourness required for a beer-flavored beverage.
(The panelists evaluated samples while making discussion.)

The results of the sensory evaluation test were as follows:

**[Table 1]**

| Concentration added | mg/L | 10 | 100 | 1,000 | Comments about reduced sourness |
|---|---|---|---|---|---|
| Sodium glutamate | Strength | 1.125 | 0 | | Sourness-reducing or -easing effect. |
| | Quality | Δ | Δ | | At 10 mg/l, sourness was still outstanding. At 100 mg/l, umami lingered in aftertaste and was slightly unpleasant, although sourness was reduced or eased. |
| Alanine | Strength | 1.5 | 1 | | Taste was rich and mild. |
| | Quality | Δ | Δ | | At both 10 mg/l and 100 mg/l, sourness was still slightly unpleasant. |
| Glycine | Strength | 1.75 | 0.75 | | Sourness was no longer sharp and was mild. |
| | Quality | × | Δ | | At 100 mg/l, the body required for beer was decreased to make the beverage watery, although sourness was reduced or eased. |
| Succinic acid | Strength | 2 | 1.25 | | Sourness-reducing or-easing effect. |
| | Quality | × | Δ | | Even at 100 mg/l, an excess of sourness was felt, whereas umami was outstanding and slightly unpleasant. |
| Disodium succinate | Strength | | 1.25 | | Sourness-reducing or -easing effect. The obtained beverage was less sour than that obtained using succinic acid. |
| | Quality | | Δ | | Sourness was slightly outstanding. |
| Sodium L-tartrate | Strength | | 2 | 2 | Sourness was neither reduced norerased. |
| | Quality | | × | × | Astringency or bitterness was present. |
| Monosodium fumarate | Strength | | 2 | 2 | Sourness was increased. |
| | Quality | | × | × | Sourness was outstanding. |
| Potassium chloride | Strength | | 2 | 2 | Saltiness was present. Sourness-reducing or -easing effect was absent. |
| | Quality | | × | × | Sourness was outstanding. |

These results demonstrated that some of the ingredients make a sourness strength of the wort 1.25 or lower, However, their sourness-reducing or -easing effects were insufficient, or the resulting beverages lacked balance in the quality of sourness as a beer-flavored beverage (i.e., other tastes were outstanding). The addition of the single ingredient could not produce satisfactory results.

### (3) Evaluation on sourness - II -

To the wort prepared in section (1), combinations of various ingredients were added in an amount shown in Tables 2 to 6 per L of the wort. These samples were subjected to a sensory evaluation test. The sensory evaluation test was conducted in the same way as in section (2). The results of the sensory evaluation test were as follows:

### Sodium glutamate and succinic acid

**[Table 2]**

| | | | | | |
|---|---|---|---|---|---|
| Concentration of sodium glutamate added | 10 | 30 | 50 | 75 | 100 |
| Concentration of succinic acid added | 50 | 150 | 100 | 100 | 100 |
| Strength of sourness | 0.75 | 1.375 | 0.5 | 0.375 | 0.125 |
| Balance of tastes | ○ | × | ○ | ○ | Δ |
| Comments | All tastes were no longer sharp. Sourness was slightly present at first, but hardly remained in aftertaste. | Sourness was out of proportion to umami and was contrarily slightly strengthened. | Sourness was reduced or eased and well-balan ced with umami which was felt without unpleasant ness. | Sourness was reduced or eased, and umami was felt. Both the tastes were within the range of beer beverages. | Umami unpleasantly remained in aftertaste, although sourness was reduced or eased. |

| | | | | | |
|---|---|---|---|---|---|
| (Concentration unit: mg/L) | | | | | |

Sodium glutamate had a remarkable sourness-reducing or -easing effect. However, with increase in its concentration, outstanding umami was rather unpleasant and disturbed the balance of tastes as a beer-flavored beverage. Succinic acid had a weak sourness-reducing or -easing effect at low concentrations. However, high concentrations (concentrations exceeding 100 mg/L) of succinic acid contrarily added its original sourness as an organic acid to contrarily strengthen the sourness of the beverage.

### Sodium glutamate and alanine

**[Table 3]**

| | | | | | |
|---|---|---|---|---|---|
| Concentration of sodium glutamate added | 10 | 70 | 50 | 50 | 50 |
| Concentration of alanine added | 50 | 100 | 500 | 750 | 1,000 |
| Strength of sourness | 0.375 | 0 | 0 | 0 | 0 |
| Balance of tastes | ○ | Δ | ○ | ○ | Δ |
| Comments | Glutamic acid reduced or eased sourness, while alanine imparted a rich taste. The resulting beverage was very mild in taste. | Umami was slightly unpleasantly felt. More umami would appear to disturb the balance. Alanine prevented umami from being outstanding and contributed to a rich taste. | Umami was kept in balance. Alanine prevented umami from being outstanding. | No sourness was felt, while umami was kept in balance. Sweetness derived from alanine was slightly felt, but was mild enough to be ignored. | Umami was kept in balance, Sweetness derived from alanine was strengthened and was not within the range of beer beverages. |

| | | | | | |
|---|---|---|---|---|---|
| (Concentration unit: mg/L) | | | | | |

Sodium glutamate had a remarkable sourness-reducing or -easing effect. However, with increase in its concentration, outstanding umami was rather unpleasant and disturbed the balance of tastes as a beer-flavored beverage. In this combination, sodium glutamate seemed to have the upper limit at an added concentration of 50 mg/L. Alanine was very mild in taste and had the effect of reducing or easing sourness while imparting a rich taste (body). Alanine stably maintained the balance even at a low concentration (50 mg/L) to high concentrations (750 mg/L or higher). However, it was demonstrated that alanine added in an amount of 1,000 mg/L produces strong sweetness that goes out of the range as a beer-flavored beverage.

### Sodium glutamate and glycine

**[Table 4]**

| | | | | | |
|---|---|---|---|---|---|
| Concentration of sodium glutamate | 5 added | 10 | 10 | 50 | 50 |
| Concentration of glycine added | 50 | 25 | 50 | 150 | 250 |
| Strength of sourness | 1.125 | 0,750 | 0.375 | 0 | 0 |
| Balance of tastes | Δ | ○ | ○ | ○ | × |
| Comments | A clear, refreshing taste derived from glycine was felt, whereas sourness was still distinctively strong. | Glutamic acid reduced or eased sourness. The refreshing effect of glycine was also felt. | Umami and sourness were well-balanced, Sharp aftertaste expected for beer was present, | The balance was achieved, but a clear taste was felt by the effect of glycine. The body was within the range of beer, but was slightly weak. | Umami and sourness were well-balanced. However, glycine made the beverage watery and impaired the body as beer, |

| | | | | | |
|---|---|---|---|---|---|
| (Concentration unit: mg/L) | | | | | |

Sodium glutamate had a sourness-reducing or -easing effect. However, with increase in its concentration, umami lingered and was unpleasantly felt in aftertaste. Glycine had the effect of imparting a clear taste, which was compatible and well-balanced with the umami of glutamic acid. However, it was demonstrated that glycine added in larger amounts made the beverage more watery and significantly impaired the body indispensable for beer-flavored beverages.

### Succinic acid and alanine

**[Table 5]**

| | | | | | |
|---|---|---|---|---|---|
| Concentration of succinic acid added | 25 | 50 | 25 | 50 | 100 |
| Concentration of alanine added | 25 | 25 | 50 | 500 | 500 |
| Strength of sourness | 1.5 | 0.875 | 0.75 | 0.625 | 2 |
| Balance of tastes | ○ | Δ | ○ | ○ | × |
| Comments | The umami of glutamic acid was surely felt, while the rich taste of alanine was slightly present. Although a sourness-reducing or -easing effect was felt, sourness was still distinctive, | Although a sourness-re during or -easing effect was present, the strong umami of succinic acid was slightly out of balance. | Sourness-red ucing or -easing effect was present. The umami of succinic acid and the rich taste of alanine were well-balanced and were favorable for beer beverages. | The umami of succinic acid and the rich taste of alanine were well-balanced The sweetness of alanine was not unpleasant at this concentration and rather contributed to the body in the beer beverage. | Sourness was contrarily stronger than that of the unsuppleme need control. This is presumably due to the influence of succinic acid. Although the rich taste of alanine was present, sourness was insufficiently reduced or eased. |

| | | | | | |
|---|---|---|---|---|---|
| (Concentration unit: mg/L) | | | | | |

Succinic acid had a sourness-reducing or -easing effect, albeit insufficient, at a low concentration (25 mg/L) and had slightly distinctive umami in itself at a moderate concentration (50 mg/L). However, it was demonstrated that the combined use of succinic acid and alanine can achieve a sourness-reducing or -easing effect compatible with tastes as a beer-flavored beverage. On the other hand, succinic acid at a high concentration (100 mg/L) strongly exhibited the original sourness as an organic acid and resulted in an adverse effect. Alanine exhibited the effect of reducing or easing sourness, but of imparting a rich taste. It was further demonstrated that alanine does not disturb the balance of tastes even at a high concentration (500 mg/L) and can be used in a very wide concentration range.

### Succinic acid and glycine

**[Table 6]**

| | | | | | |
|---|---|---|---|---|---|
| Concentration of succinic acid added | 25 | 30 | 50 | 40 | 50 |
| Concentration of glycine added | 25 | 50 | 30 | 40 | 100 |
| Strength of sourness | 1 | 1.875 | 2 | 2 | 2 |
| Balance of tastes | Δ | × | × | × | × |
| Comments | Sourness-reducing or -easing effect could be confirmed. However, succinic acid had slightly distinctive umami, while glycine slightly decreased the body. | Sourness was evidently strong and was almost equivalent to that of the unsuppleme nted control. Glycine decreased the rich taste. | Sourness was felt, and a sourness-re during or -easing effect was almost absent. The umami of succinic acid remained in aftertaste. | Sourness was felt, and a sourness-reducing or -easing effect was almost absent. The umami of succinic acid remained in aftertaste. | Sourness was strong. Due to the body decreased by glycine, sourness and umami were distinctively felt and disturbed the balance. |

| | | | | | |
|---|---|---|---|---|---|
| (Concentration unit: mg/L) | | | | | |

The combination of succinic acid and glycine did not exhibit the expected effect, Succinic acid had a sourness-reducing or -easing effect at a low concentration (25 mg/L), but had distinctive umami at a concentration of 40 mg/L. Glycine had the effect of imparting a clear taste. It was demonstrated that due to this effect, the richness of the whole taste was decreased to make the original sourness and the umami of succinic acid more distinctive.

### (4) Component analysis

pH and acidity were measured for a seasoning ingredient-unsupplemented wort and a wort supplemented with a seasoning ingredient that was confirmed in section (3) to have a sourness-reducing or -easing effect and a taste-balancing effect. In addition, the concentrations of amino acids and organic acids were measured.

The pH was measured using a DKK TOA HM-30R pH meter (DKK-TOA CORP.). The acidity was measured by titration with 0.1 M sodium hydroxide using Hiranuma automatic titrator COM-2500 (Hiranuma Sangyo Corp.).

The concentrations of amino acids were measured using a Hitachi L-8800 amino acid analyzer (Hitachi High-Technologies Corp.). Specifically, #2622 and #2619 were used as a main column and as a guard column, respectively. The amino acid was reacted with ninhydrin for color development and detected at 570 nm. Its concentration was calculated from a calibration curve prepared in advance.
The concentrations of organic acids were measured using an Agilent capillary electrophoresis system (Agilent). Specifically, a capillary of 80.5 cm in total length and 50 µm in internal diameter made of fused silica was used. 0.035 mM hexadimethrine bromide, 15 mM 2,6-pyridinedicarboxylic acid, and 2 mM AMP-Na (pH 5.55) were each used as an electrophoresis bluffer. The organic acid was detected at a detection wavelength of 350 nm and a reference of 210 nm. Its concentration was calculated from a calibration curve prepared in advance.

The analysis results were as follows:

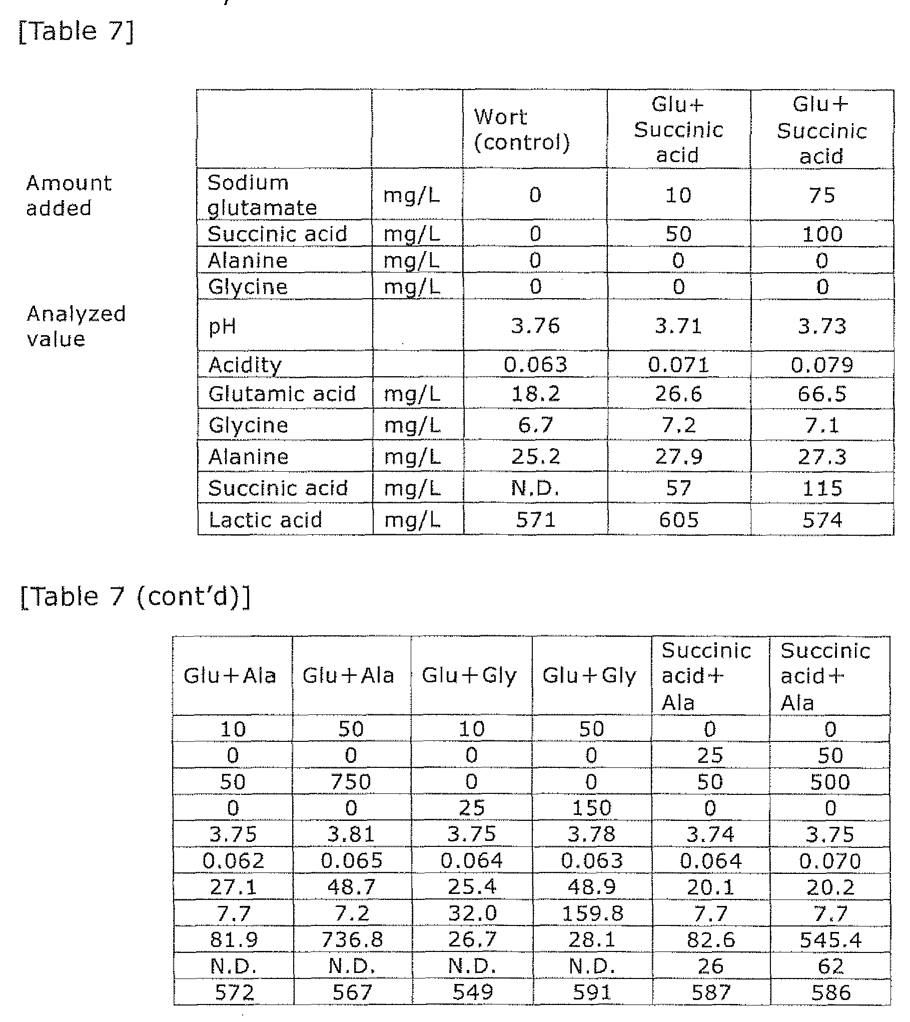

## Claims

1. An unfermented beer-flavored malt beverage having a pH lower than 4.0 comprising a wort, a pH adjuster, and a seasoning ingredient, wherein the seasoning ingredient is selected from the group consisting of a combination of glutamic acid and succinic acid, a combination of glutamic acid and alanine, a combination of glutamic acid and glycine, and a combination of succinic acid and alanine and the sourness of the pH adjuster is reduced or eased by the seasoning ingredient.

2. The beverage according to claim 1, wherein the pH adjuster is one, two or more organic and/or inorganic acids having a pKa of 2 to 4.

3. The beverage according to claim 1, wherein the wort is obtained by mashing a mixture comprising malt grist and water.

4. The beverage according to claim 1, wherein the seasoning ingredient is the combination of glutamic acid and succinic acid.

5. The beverage according to claim 4, wherein the beverage has glutamic acid at a concentration of 25 to 70 mg/L and succinic acid at a concentration of 55 to 120 mg/L.

6. The beverage according to claim 1, wherein the seasoning ingredient is the combination of glutamic acid and alanine.

7. The beverage according to claim 6, wherein the beverage has glutamic acid at a concentration of 25 to 50 mg/L and alanine at a concentration of 80 to 750 mg/L.

8. The beverage according to claim 1, wherein the seasoning ingredient is the combination of glutamic acid and glycine,

9. The beverage according to claim 8, wherein the beverage has glutamic acid at a concentration of 25 to 50 mg/L and glycine at a concentration of 30 to 160 mg/L.

10. The beverage according to claim 1, wherein the seasoning ingredient is the combination of succinic acid and alanine.

11. The beverage according to claim 10, wherein the beverage has succinic acid at a concentration of 25 to 65 mg/L and alanine at a concentration of 80 to 550 mg/L.

12. A method for producing an unfermented beer-flavored malt beverage having a pH lower than 4.0, comprising adding a pH adjuster and a seasoning ingredient selected from the group consisting of a combination of glutamic acid or a salt thereof and succinic acid or a salt thereof, a combination of glutamic acid or a salt thereof and alanine, a combination of glutamic acid or a salt thereof and glycine, and a combination of succinic acid or a salt thereof and alanine to a wort, and the sourness of the pH adjuster is reduced or eased by the seasoning ingredient.
